# EUROPEAN PATENT SPECIFICATION

(11) **EP 1 219 069 B1**
(45) Date of publication and mention of the grant of the patent: **29.03.2006**
(21) Application number: 00992714.6
(22) Date of filing: 12.12.2000
(51) Int. Cl.: H04L 12/28

(54) **SYSTEM AND METHOD FOR TUNING TO AN IN-BAND CHANNEL AND FOR IDENTIFICATION VIA RETURN-PATH**
VERFAHREN UND SYSTEM ZUM AUSWÄHLEN VON IN-BAND-KANÄLEN UND ZUR IDENTIFIZIERUNG DURCH RÜCKKANALEN
SYSTEME ET PROCEDE D'ACCORD SUR UNE VOIE INTRABANDE ET D'IDENTIFICATION VIA TRAJET DE RETOUR

(30) Priority: 14.12.1999 US 170551 P
(43) Date of publication of application: 03.07.2002
(73) Proprietor: MOTOROLA, INC., Horsham, PA 19044 (US)
(72) Inventor: BAHRAINI, Ardavan, Duluth, GA 30097 (US); JOST, Arthur, P., Mount Laurel, NJ 30097 (US)
(74) Representative: Cross, Rupert Edward Blount
(86) International application number: PCT/US2000/042816
(87) International publication number: WO 2001/045325

(56) References cited:
- WO-A-99/57889
- GOLDBERG L: "MCNS/DOCSIS MAC CLEARS A PATH FOR THE CABLE-MODEM INVASION" ELECTRONIC DESIGN, PENTON PUBLISHING, CLEVELAND, OH, US, vol. 45, no. 27, 1 December 1997 (1997-12-01), pages 69-70,74,78,80, XP000755759 ISSN: 0013-4872

## Description

### FIELD OF THE INVENTION

The present invention relates to the field of initializing a set-top terminal of a cable communication system, and, in particular, relates to identifying an in-band channel frequency of the data over cable service interface specification ("DOCSIS").

### BACKGROUND OF THE INVENTION

Once an end-user subscribes to any of the variety of analog or digital cable services currently available, it is generally necessary for the user's set-top box or terminal to be set up or "initialized". Whether all or portions of such initialization are automated or performed by a service technician, the common denominator is that time must be expended to complete the initialization.

The time and effort required for set up, of course, depends on the nature of the cable services involved. One aspect of initialization is the identification of the so-called "in-band" DOCSIS channel frequency, which, among other uses, synchronizes the clocks of the associated set-top terminals. The identification of such frequency may be especially time-consuming when the range of possible frequencies is large, as in many parts of Europe.

Accordingly, it is desirable to reduce the time for setting up or initializing set-top terminals by optimizing transmissions between the set-top terminal and other logical components of the cable system.

'MCNS/DOCSIS MAC clears a path for the cable modem invasion' Electronic Design, Penton Publishing, Cleveland, OH, US, vol.45, No. 27, 1 December 1997, XP000755759 ISSN: 0013-4872 describes an inexpensive MAC chip with improved speed and security features.

It is likewise desirable to reduce the time to identify the in-band DOCSIS channel frequency.

### DISCLOSURE OF INVENTION

A cable system and related method involve using an out-of-band channel to identify to a set top box the in-band service channel frequency.

### BRIEF DESCRIPTION OF THE DRAWINGS

Fig. 1 is a block diagram showing exemplary components of a cable system according to the present invention;
Fig. 2 is a data flow diagram illustrating communication paths of the cable system of Fig. 1 between a digital access controller ("DAC") and an advanced set-top box ("ASTB");
Fig. 3 is a diagram illustrating transmissions between elements of the cable system of Figs. 1 and 2, including transmission of an in-band DOCSIS channel frequency information and registration via a return path;
Fig. 4 is a block diagram showing the format of one of the transmissions of Fig. 3, namely, the reportback message for so-called "autodiscovery registration," according to the present invention; and
Figs. 5 and 6 are diagrams similar to Fig. 3, showing transmissions for alternate initialization scenarios for ASTBs, including transmission of the in-band DOCSIS channel frequency information and the reportback message for "autodiscovery registration."

### DETAILED DESCRIPTION OF THE INVENTION

In general terms, the present invention includes a system and method for use in a cable system, which involves transmitting the in-band DOCSIS channel frequency over an out-of-band frequency to the set-top terminal as part of its initialization. Although the present invention is described below with regard to DOCSIS, the present invention is generally applicable to other interfaces, such as a DAVIC (Digital Audio Visual Council) compatible interface, for example. Such transmission reduces the need to "sweep" the possible frequencies for such channel. The present invention also generally includes a system and method for transmitting the set-top terminal's identification information via a return path from the set-top terminal to the Cable Modem Termination System ("CMTS") and digital access controller ("DAC"). This return-path transmission is referred to as "autodiscovery registration."

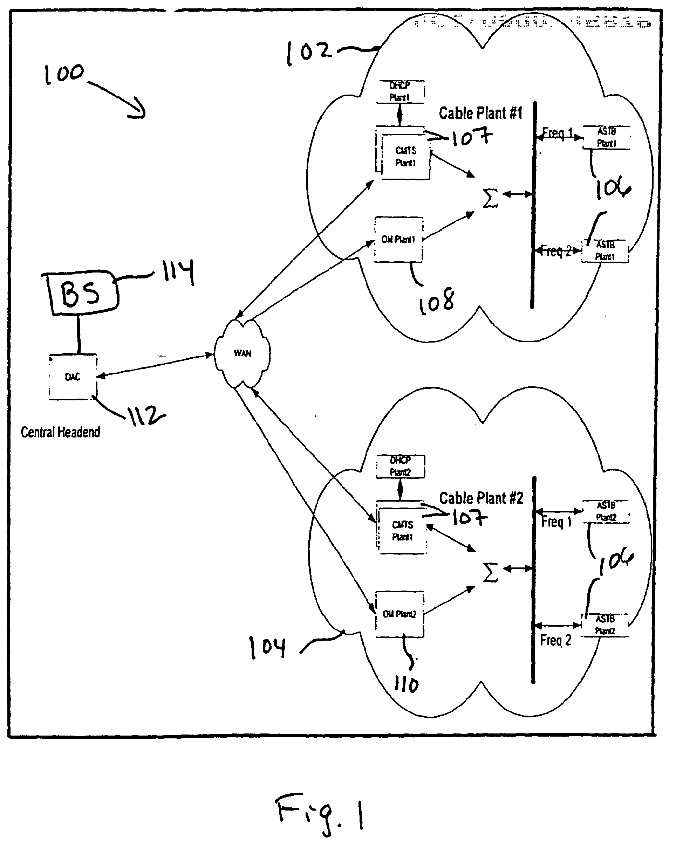

Referring now to the drawings, and in particular to Fig. 1, an exemplary cable system 100 includes a first cable plant 102 and a second cable plant 104. Each cable plant 102, 104 includes a plurality of advanced set-top boxes ("ASTBs") 106, a plurality of cable modem termination systems ("CMTS") 107, and one or more associated out of band modulators ("OM") 108, 110. Dynamic IP addresses are assigned to the ASTBs 106 using a dynamic host configuration protocol ("DHCP").

A digital access controller ("DAC") 112 controls the ASTBs 106 in the system 100. The plurality of set-top boxes 106 receive out of band communications from the digital access controller DAC 112 via their corresponding out of band modulator OM 108, 110. A billing system ("BS") 114 coupled to the DAC 112 includes a database identifying the ASTBs for billing customers and for initiating authorization of the ASTBs 106 or set-top boxes.

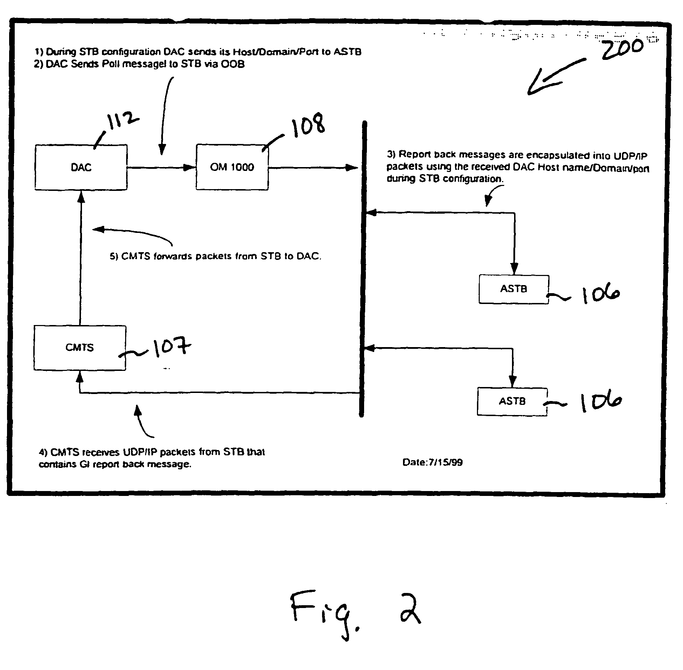

Fig. 2 is a data flow diagram 200 illustrating communication between the DAC 112 and an ASTB 106. The ASTB 106 communicates to the DAC 112 using a DOCSIS return path via the CMTS 107. For out-of-band ("OOB") downstream messaging, the DAC 112 send messages to the OM 108 which the OM 108 out-of-band ("OOB") modulates and transmits to the ASTB 106.

When a set top box ("ASTB") 106 is initially connected to a cable system 100, the ASTB 106 often does not have sufficient information about the configuration of the system 100. One component of such configuration is the DOCSIS return path. Parameters for communicating upstream over the DOCSIS return path may be provided on an in-band DOCSIS downstream channel. These communication parameters may include synchronization information to synchronize a plurality of set top boxes 106 to avoid collisions when trying to communicate upstream. Information needed to support the DOCSIS return path is generally obtained from the DOCSIS downstream in-band channel. Accordingly, the ASTB 106 needs to determine at what frequency the DOCSIS downstream in-band channel is located.

When the DOCSIS in-band channel is located within a given frequency spectrum, the ASTB may scan the spectrum to determine the particular frequency and communication parameters of the DOCSIS in-band channel. For a system using a standard ("STD") channel map, for example, the ASTB 106 generally starts at one frequency such as 61.25MHz and then scans successive frequencies in fixed increments (such as 6Mhz) until the DOCSIS in-band channel is located.

Alternatively, for a system not using a particular channel map or when the channel map is unknown, the ASTB 106 is often required to scan a larger frequency spectrum, often at smaller frequency steps. For example, in some systems, the ASTB 106 sweeps the spectrum of 100MHz to 800MHz at steps of 250kHz or 500 kHz to determine the downstream channel. Such sweeps are generally time-consuming, often requiring about 70 minutes. This delay in initialization of a set top box 106 is particularly undesirable if an installer of the set top box 106 must idly wait for the initialization procedure in order to complete installation.

In contrast, the initialization procedure of the present invention, which includes identification of the DOCSIS in-band channel, is often reduced to several minutes by sending an out-of-band (OOB) message that includes the location of the frequency of the DOCSIS in-band channel. Otherwise stated, transmission of the DOCSIS in-band channel frequency according to the present invention reduces the scanning time or hunting time of the ASTB 106: The ASTB 106 only needs to identify the OOB channel, detect the DOCSIS in-band channel frequency being communicated OOB, and then use such in-band frequency to perform the DOCSIS initialization. The DOCSIS initialization includes synchronization of the clock of the ASTB and other ranging and power-leveling functions. In one version of the present invention, the DOCSIS in-band channel frequency is identified by the ASTB 106 in 3 to 4 minutes.

The set top box may include pre-stored information identifying one or more possible frequencies of the OOB channel. Alternatively, or if the OOB channel is not at one of the pre-stored frequencies, the ASTB can search or hunt through a range of possible OOB frequencies. For example, when the OOB channel is at a frequency between 70MHz and 130 MHz, the ASTB can step through the range of frequencies to locate the OOB channel.

Although the ASTB 106 may still need to search for the OOB channel, there is a significant savings in time over searching for the in-band DOCSIS channel because OOB channels are usually bandwidth limited. In addition, in contrast to the in-band DOCSIS channel, the OOB channel has fewer parameters needed by the ASTB 106 to lock into the OOB channel. For example, for an OOB channel, data may be communicated using quadrature phase shift keying ("QPSK") with a fixed symbol rate. The in-band DOCSIS channel, on the other hand, may have several additional communication parameters that the ASTB 106 must process before achieving the required lock. For instance, the ASTB 106 may tune into the correct in-band DOCSIS channel frequency, but at the wrong symbol rate, and thereby not lock.

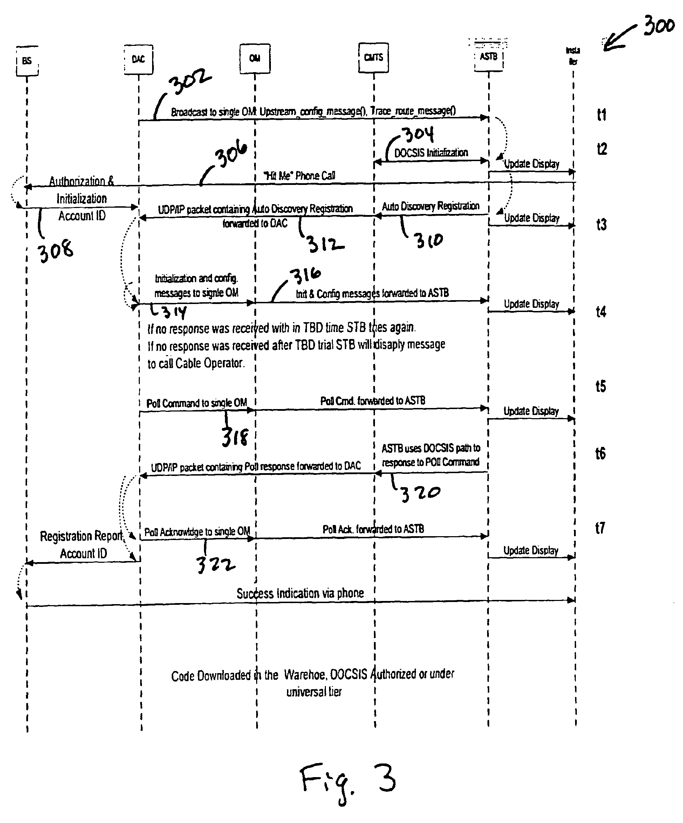

The system and method of identifying the DOCSIS in-band channel frequency by means of OOB transmissions has application in a variety of cable systems, and in a variety of initialization scenarios. One initialization scenario is diagrammed in Fig. 3, in which the ASTB 106 has been staged by downloading the application and operating system software and enabling the ASTB 106 for DOCSIS functionality. The top row shows the devices in the system 100 and the right column denotes time. At time t1, an ASTB 106 is installed and receives a trace and route message (trace_route_message) 302 from the DAC 112. The DAC 112 transmits a trace and route message via the OM 108 to the ASTB 106. The trace and route message 302 is an out-of-band transmission to the ASTB 106 which includes the in-band DOCSIS channel frequency as discussed above. The DAC 112 may continuously transmit the trace and route message 302 for initializing set top boxes 106 as they are installed. The ASTB 106 then decodes the in-band DOCSIS channel parameters from the trace and route message 302.

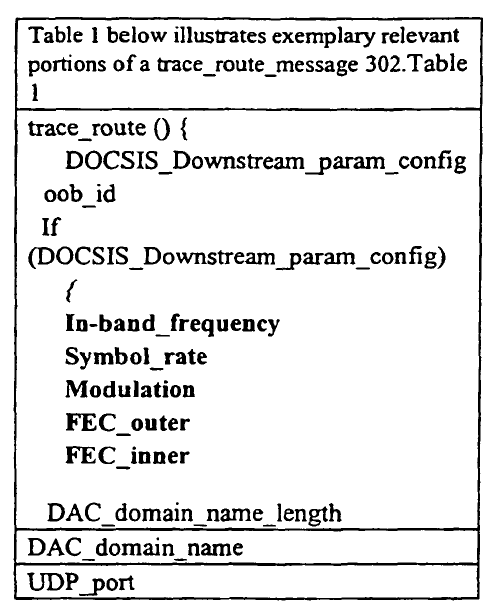

The exemplary trace_route_message 302 includes parameters, as designated in bold text in table 1, to enable the ASTB 106 to tune to an in-band DOCSIS channel. The DOCSIS_Downstream_param_config field in the trace_route_message 302 is a flag which indicates to the set top box 106 whether the DOCSIS communication information is included in the message. The ASTB filters the OOB channel for a trace_route_message having the DOCSIS_Downstream_param_config flag set, which indicates that the trace-route message includes the following communication information:
In-band_frequency
Symbol_rate
Modulation
FEC_outer
FEC_inner
DAC_domain_name_length
DAC_domain_name
UDP_port (to talk back to DAC).

Once the ASTB 106 has decoded the above parameters, the ASTB 106 then has the necessary information to lock into the in-band DOCSIS channel and then begins DOCSIS initialization 304 at time t2 in Fig. 3. The ASTB 106 preferably includes a display to inform the installer of the ASTB 106 of the progress of the installation. After DOCSIS installation 304 at time t2, the display is updated.

Between times t2 and t3, the installer calls 306 the billing system BS 114 and requests authorization. The BS 114 sends 308 an authorization and initialization command to the DAC 112 to allow the DAC 112 to authorize initialization of the ASTB 106.

At time t3, after DOCSIS initialization has completed, the ASTB 106 generates an Auto Discovery or reportback message which it transmits 310 upstream to CMTS 107 which forwards 312 the Auto Discovery message to the DAC 112. It is generally necessary or desirable for the digital access controller DAC 112 to know the location of a particular ASTB 106 within the cable system 100. The identification of such location is accomplished by using the DOCSIS (Data Over Cable Service Interface Specification) return path. The reportback message identifies to the DAC 112 where the ASTB 106 is within the system 100 and how it may communicate with the ASTB 106. The reportback message is transmitted to the DAC 112 via the CMTS 107 in a User Datagram Protocol ("UDP") datagram.

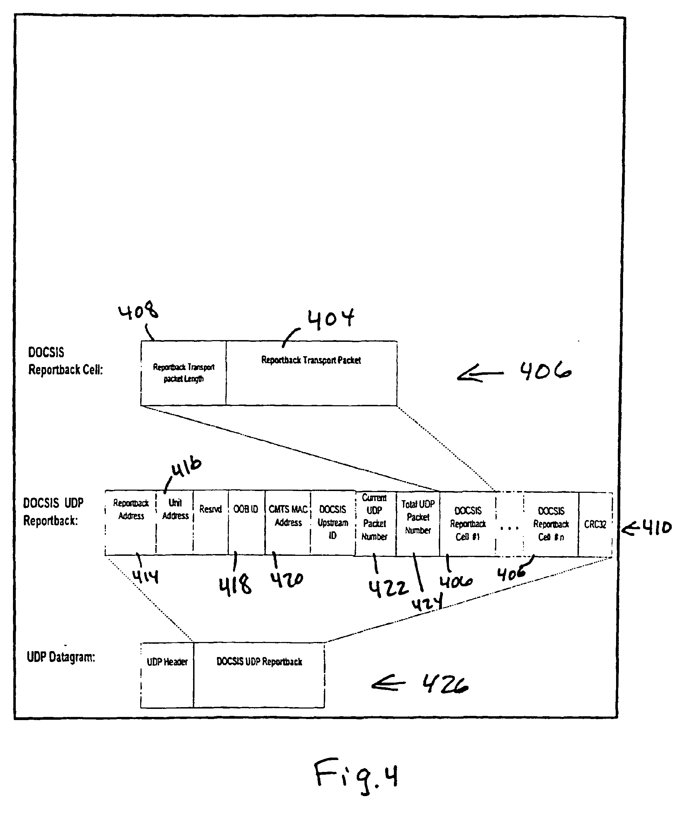

The generation of the UDP datagram is described with reference to Fig. 4. The ASTB 106 user processor firmware builds a reportback DOCSIS reportback cell 406 by appending a reportback transport packet length 408 to a reportback transport packet 404. The reportback transport packet length 408 is the total length of reportback transport packet.

The DOCSIS reportback cells 406 are then assembled into a DOCSIS UDP reportback datagram 410. The reportback address 414 is used by the DAC 112 to match incoming messages to the sent poll messages. The Unit Address 416 is a unique identifier of each ASTB 106. The OOB ID 418 which was obtained from the trace and route message (see table 1) identifies the IP address of the OOB channel that ASTB 106 is listening to. The CMTS MAC Address 420 identifies a CMTS line card MAC address for determining where the ASTB 106 is located in the system 100. The current UDP Packet number 422 indicates the current UDP packet for a poll message. The total UDP packet number 424 indicates the last UDP packet for this poll message.

The DOCSIS UDP reportback datagram 410 is then encapsulated into a UDP datagram 426 using the DAC host name, Domain name and port number received from the trace and route message (see table 1) during initialization to determine the DAC IP address. Thus, the reportback message sent to the DAC 112 at time t3 includes identification information of the sending ASTB 106 which uniquely identifies the location of the ASTB 106 in the system 100.

Returning to Fig. 3, assuming authorization 308 is received from BS 114, the DAC 112 forwards 314 initialization and configuration messages to the OM which modulates these messages and transmits 316 them to the ASTB 106. A time t4, the ASTB 106 receives these messages and updates its display.

The DAC 112 then verifies that the ASTB 106 received the initialization and configuration messages by sending a Poll Command message 318 at t5 to the ASTB 106. The Poll Command message requests the ASTB 106 to confirm receipt of the previous message. At time t6 the ASTB 106 responds 320 and the DAC 112 sends an acknowledgement 322 at time t7. The DAC 112 then informs the BS 114 of successful initialization and the BS 114 informs the installer.

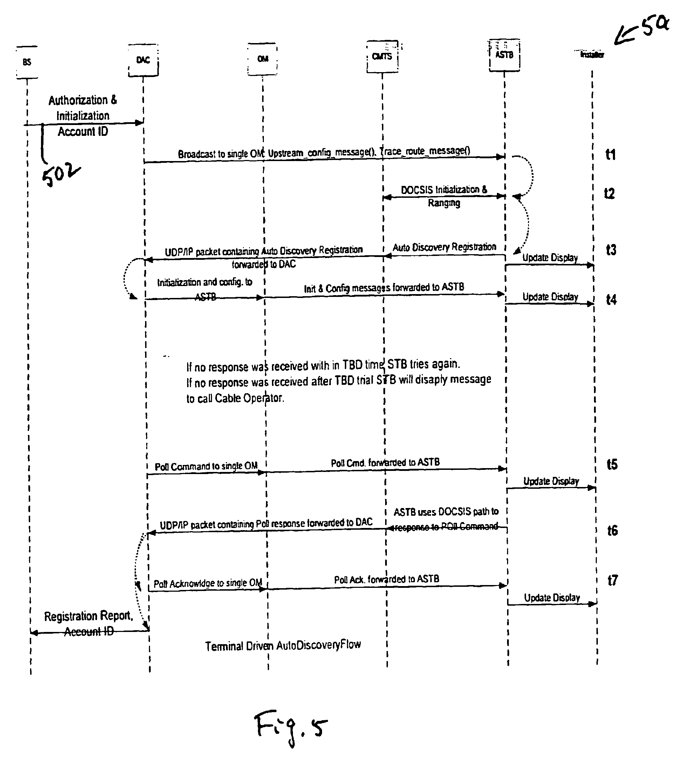

Fig. 5 is a flow chart 500 similar to flow chart 300 in Fig. 3, but for the alternate case where the installation is performed by an end-user rather than an installer. For example, an end-user may purchase the ASTB 106 from a retail store and then take it home and connect it to the cable system 100. The purchase from the retail store may automatically cause a signal to the BS 114 to authorize the ASTB 106. The BS 114 can then authorize 502 the DAC 112 to initialize the ASTB 106. The remaining steps in Fig. 5 are similar to those in Fig. 3.

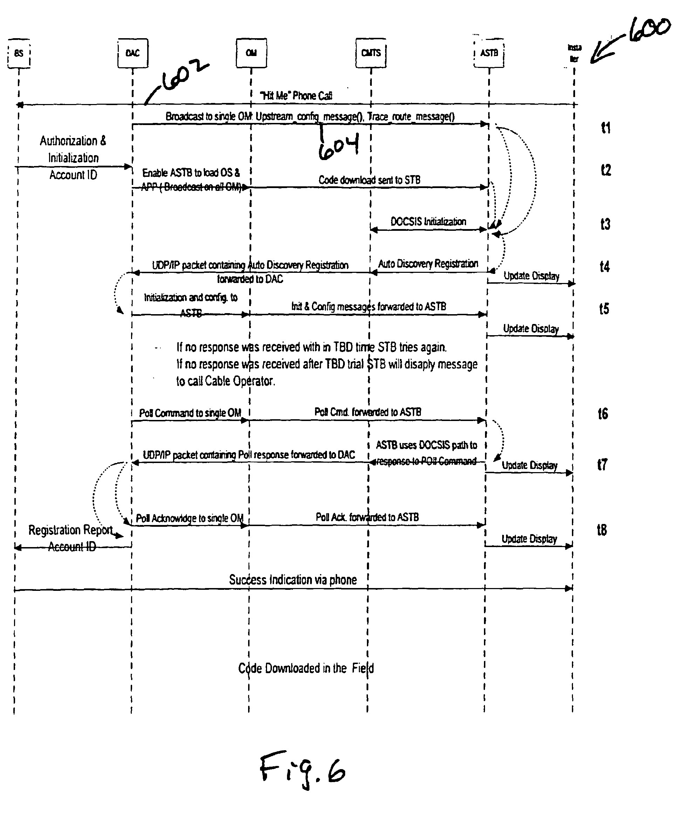

The flow chart 600 of Fig. 6 covers another alternate scenario, in which the ASTB 106 does not include application software and is not authorized to use DOCSIS. The ASTB 106 first needs to get DOCSIS authorization, then download code, then proceed with initialization. Thus, code download is performed at the time of installation. At time t1, the installer calls the BS 114 at step 602, and requests authorization; the ASTB 106 receives the trace and route message 604. At time t2, the BS 114 authorizes the DAC 112 to initialize the ASTB 106 and the DAC 112 then broadcasts application and operating system code on all OMs 108, 110 for the ASTB 106. DOCSIS initialization and Auto Discovery then proceeds similarly to the procedure described above with regard to Fig. 3.

Although illustrated and described above with reference to certain specific embodiments, the present invention is nevertheless not intended to be limited to the details shown. Rather, those of skill in the art will recognize various modifications in details within the scope and range of equivalents of the principles of the present invention. All such modifications are encompassed by the present invention.

## Claims

1. A method of initializing a set top box (106), for use in a cable communication system (100) the method **characterised by** the steps of
transmitting a signal on an out-of-band channel to be received by the set top box (106), the signal indicating an in-band service channel frequency;
receiving the signal at the set top box (106) to identify the in-band service channel frequency;
receiving signals over the in-band service channel frequency to initialize the set top box (106); and
identifying the set top box (106) to the cable system (100) by transmitting signals from the set top box via a return path.

2. The method of claim 1, wherein the in-band service channel frequency comprises a DOCSIS in-band channel frequency.

3. The method of claim 1, wherein the in-band service channel frequency comprises a DAVIC in-band channel frequency.

4. The method of claim 3, wherein the in-band service channel frequency is in the range of 100 MHz to 800 MHz.

5. The method of claim 1, wherein the step of transmitting a signal on an out-of-band channel includes the step of transmitting a trace and route message (302) which includes the in-band service channel frequency parameters therein, and a flag indicating the presence of said frequency.

6. The method of claim 1, wherein the step of identifying the set top box (106) to the cable system (100) includes the step of transmitting UDP/IP packets.

7. The method of claim 1, further comprising the step of authorising a digital access controller to initialize the set top box (106) after the step of transmitting the signal on an out-of-band channel.

8. The method of claim 1, further comprising the step of authorizing a digital access controller to initialize the set top box (106) before the step of transmitting the signal on an out-of-band channel.

9. The method of claim 1, further comprising the step of pre-loading application software into the set top box (106).

10. The method of claim 1, wherein the step of transmitting the signal includes the step of transmitting by means of a digital access controller (112), and further comprising the step of sweeping a range of out-of-band channel frequencies with the set top box (106) to locate the signal being transmitted on the out-of-band channel by the digital access controller (112).

11. A cable communication system (100) comprising a digital access controller (112) and a set top box (106) **characterised in that** the system includes an out-of-band modularor (108, 110) for out-of-band modulating a signal that has to be received by the set top box, wherein the digital access controller (112) is arranged to transmit a trace and route message containing an in-band service channel to the set top box (106) via the out of band modulator wherein the out-of-band modulator out-of-band modulates the trace and route message and **in that** the set top box (106) is arranged to decode the received out-of-band modulated trace and route message to determine an in-band service channel frequency.

12. The system (100) of claim 11, further comprising means for determining a return path channel frequency after determining the in-band service channel frequency.

13. The system (100) of claim 11, wherein the cable system utilizes DOCSIS protocols.

14. The system (100) of claim 11, wherein the cable system utilizes DAVIC protocols.

## Patentansprüche

1. Verfahren zum Initialisieren einer Set-Top-Box (106), zur Benutzung in einem Kabelkommunikationssystem (100), wobei das Verfahren durch die Schritte **gekennzeichnet** ist:
Übertragen eines Signals auf einem von der Set-Top-Box (106) zu empfangenden bandexternen Kanal, wobei das Signal eine Frequenz eines bandinternen Dienstkanals anzeigt;
Empfangen des Signals an der Set-Top-Box (106) um die Frequenz des bandinternen Dienstkanals zu identifizieren;
Empfangen von Signalen über die Frequenz des bandinternen Dienstkanals, um die Set-Top-Box (106) zu initialisieren; und
Identifizieren der Set-Top-Box (106) für das Kabelsystem (100), indem Signale von der Set-Top-Box über einen Zurückführpfad gesendet werden.

2. Verfahren nach Anspruch 1, wobei die Frequenz des bandinternen Dienstkanals eine bandinterne DOCSIS-Kanalfrequenz umfasst.

3. Verfahren nach Anspruch 1, wobei die Frequenz des bandinternen Dienstkanals eine bandinterne DAVIC-Kanalfrequenz umfasst .

4. Verfahren nach Anspruch 3, wobei sich die Frequenz des bandinternen Dienstkanals in dem Bereich von 100 MHz bis 800 MHz befindet.

5. Verfahren nach Anspruch 1, wobei der Schritt des übertragens eines Signals auf einem bandexternen Kanal den Schritt des Übertragens einer Verfolgungs- und Routennachricht (302) umfasst, die die Frequenzparameter des bandinternen Dienstkanals darin umfasst sowie ein Flag umfasst, das das Vorhandensein der Frequenz anzeigt.

6. Verfahren nach Anspruch 1, wobei der Schritt des Identifizierens der Set-Top-Box (106) für das Kabelsystem (100) den Schritt des Übertragens von UDP/IP-Paketen umfasst.

7. Verfahren nach Anspruch 1, das weiterhin den Schritt des Autorisierens eines Digitalzugangscontrollers umfasst, um die Set-Top-Box (106) nach dem Schritt des Übertragens des Signals auf einem bandexternen Kanal zu initialisieren.

8. Verfahren nach Anspruch 1, das weiterhin den Schritt des Autorisierens eines Digitalzugangscontrollers umfasst, um die Set-Top-Box (106) vor dem Schritt des Übertragens des Signals auf einen bandexternen Kanal zu initialisieren.

9. Verfahren nach Anspruch 1, das weiterhin den Schritt des vorherigen Ladens von Anwendungssoftware in die Set-Top-Box (106) umfasst.

10. Verfahren nach Anspruch 1, wobei der Schritt des Übertragens des Signals den Schritt des Übertragens mittels eines Digitalzugangscontrollers (112) umfasst, sowie weiterhin den Schritt des Durchlaufens eines Bereichs von bandexternen Kanalfrequenzen mit der Set-Top-Box (106) umfasst, um das von dem Digitalzugangscontroller (112) auf den bandexternen Kanal übertragene Signal zu lokalisieren.

11. Kabelkommunikationssystem (100), das einen Digitalzugangscontroller (112) und eine Set-Top-Box (106) umfasst, **dadurch gekennzeichnet, dass** das System einen bandexternen Modulator (108, 110) für ein bandexternes Modulieren eines Signals umfasst, das durch die Set-Top-Box (106) zu empfangen ist, wobei der Digitalzugangscontroller (112) so eingerichtet ist, das er eine Verfolgungs- und Routennachricht, die einen bandinternen Dienstkanal enthält, an die Set-Top-Box (106) über den bandexternen Modulator überträgt, wobei der bandexterne Modulator bandextern die Verfolgungs- und Routennachricht moduliert, und dass die Set-Top-Box (106) so eingerichtet ist, dass sie die empfangene, bandextern modulierte Verfolgungs- und Routennachricht dekodiert, um eine Frequenz des bandinternen Dienstkanals zu bestimmen.

12. System (100) nach Anspruch 11, das weiterhin Mittel zum Bestimmen einer Frequenz eines Zurückführpfadkanals nach dem Bestimmen der Frequenz des bandinternen Dienstkanals umfasst.

13. System (100) nach Anspruch 11, wobei das Kabelsystem DOCSIS-Protokolle verwendet.

14. System (100) nach Anspruch 11, wobei das Kabelsystem DAVIC-Protokolle verwendet.

## Revendications

1. Procédé d'initialisation d'un boîtier décodeur (106) destine à un usage dans un système de communication par câble (100), le procédé étant **caractérisé par** les étapes consistant à :
transmettre un signal sur une voie hors bande en vue de sa réception par le boîtier décodeur (106), le signal indiquant une fréquence de voie de service intrabande ;
recevoir le signal au niveau du boîtier décodeur (106) afin d'identifier la fréquence de voie de service intrabande ;
recevoir des signaux sur la fréquence de voie de service intrabande afin d'initialiser le boîtier décodeur (106) ; et
identifier le boîtier décodeur (106) auprès du système de communication par câble (100) en transmettant des signaux depuis le boîtier décodeur par le biais d'une voie de retour.

2. Procédé selon la revendication 1, dans lequel la fréquence de voie de service intrabande comprend une fréquence de voie intrabande DOCSIS.

3. Procédé selon la revendication 1, dans lequel la fréquence de voie de service intrabande comprend une fréquence de voie intrabande DAVIC.

4. Procédé selon la revendication 3, dans lequel la fréquence de voie de service intrabande se situe dans la plage de 100 MHz à 800 MHz.

5. Procédé selon la revendication 1, dans lequel l'étape consistant à transmettre un signal sur une voie hors bande comprend l'étape consistant à transmettre un message de traçage et d'acheminement (trace-route message) (302) qui contient en lui les paramètres de la fréquence de voie de service intrabande, et un drapeau indiquant la présence de ladite fréquence.

6. Procédé selon la revendication 1, dans lequel l'étape consistant à identifier le boîtier décodeur (106) auprès du système de communication par câble (100) comprend l'étape consistant à transmettre des paquets UDP/IP.

7. Procédé selon la revendication 1, comprenant en outre l'étape consistant à autoriser un contrôleur d'accès numérique à initialiser le boîtier décodeur (106) après l'étape consistant à transmettre le signal sur une voie hors bande.

8. Procède selon la revendication 1, comprenant en outre l'étape consistant à autoriser un contrôleur d'accès numérique à initialiser le boîtier décodeur (106) avant l'étape consistant à transmettre le signal sur une voie hors bande.

9. Procède selon la revendication 1, comprenant en outre l'étape consistant à charger au préalable un programme d'application dans le boîtier décodeur (106).

10. Procédé selon la revendication 1, dans lequel l'étape consistant à transmettre le signal comprend l'étape consistant à effectuer la transmission au moyen du contrôleur d'accès numérique (112), et comprend en outre l'étape consistant à balayer une plage de fréquences de voie hors bande avec le boîtier décodeur (106) afin de localiser le signal qui est transmis sur la voie hors bande par le contrôleur d'accès numérique (112).

11. Système de communication par câble (100) comprenant un contrôleur d'accès numérique (112) et un boîtier décodeur (106), **caractérisé en ce que** le système comprend un modulateur hors bande (108, 110) pour moduler hors bande un signal qui doit être reçu par le boîtier décodeur, dans lequel le contrôleur d'accès numérique (112) est disposé de manière à transmettre un message de traçage et d'acheminement contenant une voie de service intrabande vers le boîtier décodeur (106) par le biais du modulateur hors bande, dans lequel le modulateur hors bande module hors bande le message de traçage et d'acheminement, et **en ce que** le boîtier décodeur (106) cet disposé de manière à décoder le Message de traçage et d'acheminement hors bande reçu afin de déterminer une fréquence de voie de service intrabande.

12. Système (100) selon la revendication 11, comprenant en outre des moyens pour déterminer une fréquence de voie de retour après que la fréquence de voie de service intrabande a été déterminée.

13. système (100) selon la revendication 11, dans lequel le système de communication par câble utilise des protocoles DOCSIS.

14. Système (100) selon la revendication 11, dans lequel le système de communication par câble utilise des protocoles DAVIC.
